# FASCICULE DE BREVET EUROPEEN

(11) **EP 1 545 854 B1**
(45) Date de publication et mention de la délivrance du brevet: **10.05.2006**
(21) Numéro de dépôt: 03798220.4
(22) Date de dépôt: 24.09.2003
(51) Int. Cl.: B29C 41/46, B29C 41/22

(54) **PROCEDE DE ROTOMOULAGE D'UNE PIECE COMPRENANT UNE COUCHE EN MOUSSE THERMOPLASTIQUE**
VERFAHREN ZUM ROTATIONSFORMEN EINES WERKSTÜCKS MIT EINER SCHICHT AUS THERMOPLASTISCHEM SCHAUM
METHOD FOR ROTATIONAL MOULDING OF A WORKPIECE COMPRISING A THERMOPLASTIC FOAM LAYER

(30) Priorité: 27.09.2002 FR 0211994
(43) Date de publication de la demande: 29.06.2005
(73) Titulaire: COMMISSARIAT A L'ENERGIE ATOMIQUE, 75752 Paris Cédex 15 (FR)
(72) Inventeur: MAZABRAUD, Philippe, F-45000 Orleans (FR); DOULIN, Gwénael, F-44240 La Chapelle-sur-Erdre (FR); SANCHEZ, André, F-01000 Bourg en Bresse (FR); COTEL, Jean-François, F-69006 Lyon (FR)
(74) Mandataire: Poulin, Gérard
(86) Numéro de dépôt international: PCT/FR2003/002803
(87) Numéro de publication internationale: WO 2004/028773

(56) Documents cités:
- EP-A- 0 160 298
- DE-A- 2 350 763
- GB-A- 2 288 359

## Description

Le sujet de cette invention est un procédé de rotomoulage de pièces comportant une couche en mousse thermoplastique.

La technique du rotomoulage ou moulage par rotation est souvent utilisée pour fabriquer des corps creux comme des ballons, des kayaks, des jouets, des pots ou des poubelles, des réservoirs ou des équipements routiers. Elle consiste à déposer une quantité de matière à mouler devant composer la pièce dans un moule dont l'empreinte correspond à la forme extérieure de la pièce, et ce moule est accroché à un dispositif de mise en rotation autour de deux axes qui est mis en marche pour que les forces de gravité dessinent la pièce en répartissant la matière à mouler sur toute la surface interne du moule. Un chauffage du moule est ensuite entrepris pour fondre le polymère. Quand il est interrompu, le refroidissement qui s'ensuit fait se solidifier le polymère à la forme de la pièce. Les dernières étapes du procédé consistent à arrêter le mouvement du moule et à l'ouvrir pour retirer la pièce.

Quand la pièce comprend plusieurs couches, le procédé est répété autant de fois, les quantités de matière formant les couches successives étant introduites dans le moule après que la couche précédente a été formée, ou présentes dès le début dans le moule, dans des boîtes calorifugées dont on règle l'ouverture au bon moment pour libérer le contenu dans le moule.

Des structures comprenant une couche de mousse en polymère thermoplastique sont souvent appréciées pour améliorer l'isolation, la tenue au choc ou le poids de la pièce. Un polymère peut être rendu moussant par un agent qui y est ajouté et se décompose en gaz pendant un chauffage. Des difficultés de fabrication apparaissent cependant quand un procédé de rotomoulage est utilisé, puisqu'il est difficile de maîtriser le degré de moussage et que l'application sans précaution des procédés précédents donne normalement une couche de mousse d'épaisseur imprévisible, et irrégulière, dont la qualité et l'adhérence aux couches voisines sont aussi sujettes à caution.

Une variante du procédé adaptée à de telles matières, exposée dans le brevet américain 3 976 821, consiste à utiliser un moule spécial comprenant une concavité et une double enveloppe composée d'une enveloppe délimitant le contour extérieur et d'une enveloppe délimitant la concavité. La matière de la couche extérieure est versée seule, et la mise en rotation, entreprise de la même façon que dans le procédé usuel, la répartit encore sur toute la surface interne du moule dans les deux enveloppes. La formation de la couche est encore accomplie par une fusion suivie d'une solidification, après quoi la matière moussante est introduite dans le moule par un orifice des enveloppes. La matière moussante s'écoule dans la couche solidifiée et l'occupe pendant le moussage, l'orifice ayant été rebouché. On se garantit ainsi contre les irrégularités de forme et d'épaisseur de la couche moussante, mais ce procédé présente les inconvénients principaux que le moule a une forme plus compliquée et que les enveloppes ont forcément la même épaisseur et la même composition.

Une variante du procédé consiste ici aussi à placer en même temps la matière la couche extérieure et la matière moussante dans le moule, celle-ci dans une boîte où un sac qui s'ouvre quand les enveloppes ont été formées. D'autres procédés consistent à verser ensemble les deux quantités de matière, de la couche extérieure et moussante, ensemble dans le moule, mêlés sous forme de poudre ou de granulés. La séparation des deux catégories de polymères s'effectue grâce aux différences de granulométrie, de viscosité ou de température de fusion. Mais comme le moussage n'est pas non plus maîtrisé par ces procédés, on reste obligé de prévoir un moule épousant la concavité de la pièce à produire, et une enveloppe intérieure et une enveloppe extérieure de même épaisseur et de même composition doivent être produites.

On doit aussi mentionner le document EP-A - 0 160 298, qui décrit un procédé de rotomoulage, où plusieurs couches sont formées successivement dans le moule, dont une couche moussante, et le chauffage est interrompu avant la formation d'une couche intérieure mais après la formation de la couche moussante ; et le document 6B-A- 2 288 359 aussi décrit l'interruption du chauffage pendant un procédé de rotomoulage de plusieurs couches, mais encore pas pendant la formation d'une couche moussante.

L'invention permet d'éliminer ces inconvénients et de construire des pièces comprenant au moins une première couche, en polymère compact, entourant une deuxième couche, en mousse, et éventuellement d'autres couches, par un moule qui n'épouse que la surface extérieure de la pièce. Il devient alors possible de construire des pièces comprenant une cavité entièrement ou essentiellement fermée, c'est-à-dire dont la concavité présente des contre-dépouilles qui rendraient impossible l'extraction d'un moule épousant la surface de la cavité, ce qui était une contrainte des procédés antérieurs. Les couches, et notamment les enveloppes, peuvent être de nature ou d'épaisseurs différentes les unes des autres.

On verra que l'originalité de l'invention est à trouver surtout dans une réalisation particulière de l'étape de formation de la couche en mousse, qui permet de la maîtriser. Plus précisément, elle concerne sous sa forme la plus générale un procédé de rotomoulage d'une pièce comprenant au moins une première couche, en polymère compact, et une deuxième couche, en polymère en mousse et entouré sur une face par la première couche, comprenant des étapes de placement d'une première quantité de matière devant composer la première couche dans un moule, de rotation du moule pour dessiner la première couche et de chauffage de la première quantité de matière pour la fondre, puis de placement d'une deuxième quantité de matière devant composer la deuxième couche dans le moule et de remise en rotation du moule, la rotation du moule étant maintenue jusqu'à ce que la deuxième quantité de matière atteigne la température de moussage et tant qu'elle reste à la température de moussage ou au-dessus de cette température, formant ainsi la deuxième couche, caractérisé en ce que le chauffage est interrompu avant que la deuxième quantité de matière n'atteigne sa température de moussage (et souvent, mais pas nécessairement, après que la deuxième quantité de matière a dépassé sa température de fusion).

Ces caractéristiques essentielles ainsi que d'autres seront maintenant décrites plus complètement en liaison aux figures :
- les figures 1A à 1D détaillent un procédé de rotomoulage,
- la figure 2 illustre une pièce construite avec l'invention,
- et la figure 3 est un diagramme de température en fonction du temps.

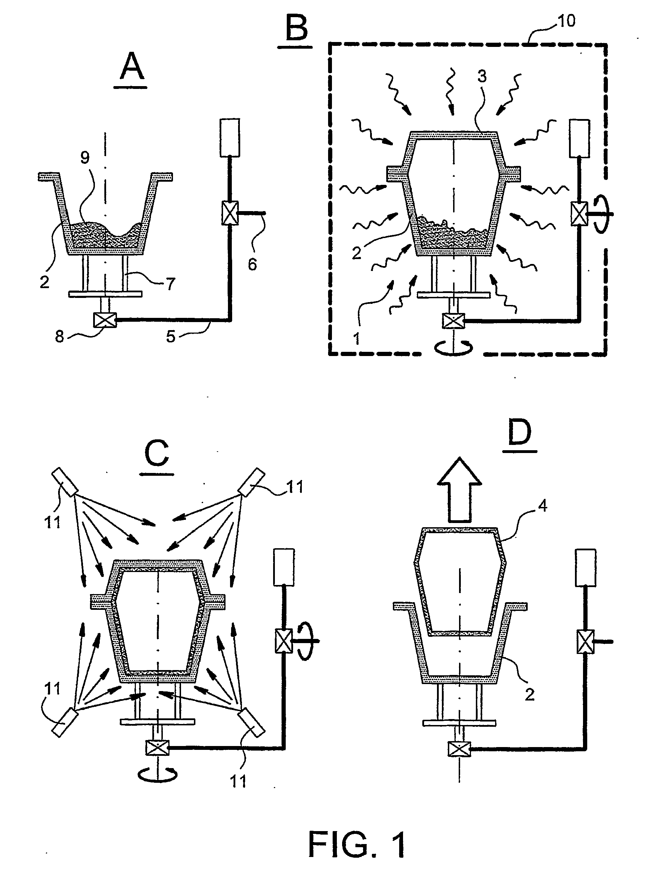

Les premières figures 1A à 1D illustrent tout d'abord les étapes essentielles d'un procédé quelconque de rotomoulage. La pièce 4 considérée ici est un corps creux doublement tronconique. Elle est fabriquée dans un moule 1 composé de deux coquilles 2 et 3 assemblées à un plan de joint correspondant au plus grand périmètre de la pièce 4. Une des coquilles 2 est montée à l'extrémité d'un bras coudé 5 susceptible d'être mis en rotation autour d'un axe 6. De plus, un support 7 de la coquille 2 sur le bras coudé 5 est susceptible de tourner autour d'un second axe 8 perpendiculaire au précédent.

La matière 9 devant former la pièce 4 est d'abord versée dans la coquille 2 (A), puis la deuxième coquille 3 est assemblée à la première, le moule 1 est mis en rotation double autour des axes 6 et 8 et il est chauffé, en le plaçant dans un four 10 ou par tout autre moyen (B). La matière 9 tapisse toutes les parois du moule 1 sous l'effet des forces de gravité et fond sous l'effet de la chaleur. Le moule 1 est ensuite laissé à refroidir ou refroidi volontairement par des jets d'air ou de liquide 11 (C), et quand la pièce 4 a été solidifiée, la coquille 3 est détachée et la pièce 4 est extraite (D).

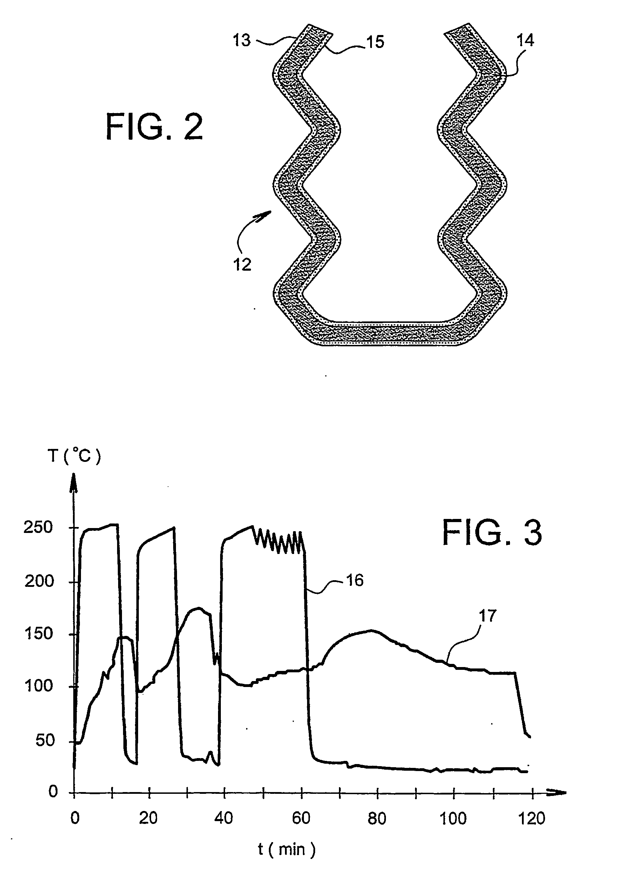

On a vu que ce procédé pouvait être répété pour donner une pièce formée de couches multiples. L'utilisation de l'invention permet de l'étendre à des pièces comprenant une couche en mousse, même de forme compliquée comme celle (12) de la figure 2, en forme de réservoir cannelé où alternent des renflements et des resserrements annulaires. La paroi est composée d'une enveloppe externe 13, d'une couche intermédiaire 14, et d'une enveloppe interne 15. Les enveloppes 13 et 15 sont des polymères compacts, normalement introduits sous forme de poudre et thermoplastiques, comme des polyoléfines simples ou mélangées, colorées ou non, ou chargées ou non. La couche intermédiaire 14 est un polymère en mousse composé d'une matrice thermoplastique ayant contenu un agent moussant ou gonflant et éventuellement un agent nucléant, au départ sous forme de poudre. Ce polymère peut être dans un des types cités ci-dessus lui aussi.

Un mode de réalisation particulier de l'invention sera décrit au moyen de la figure 3 qui est un schéma de température où une courbe 16 exprime la température réalisée dans le four 10 autour d'un moule et la courbe 17 la température atteinte dans le moule 1, en fonction du temps. La pièce considérée sera la pièce 4 qui sera pourvue de trois couches semblables aux couches 13, 14 et 15 qu'on a décrites.

Une quantité de 5 kilogrammes de polymère (polyéthylène métallocène de grade commercial RM 8403 de la société BOREALIS) est introduite en poudre dans le moule 1, qui est mis en rotation biaxiale à une vitesse de quatre tours à la minute autour de l'axe 6 et d'un tour à la minute autour de l'axe 8. La température du four 10 est à 250°C. Lorsque la température dans le moule atteint 145°C, le moule 1 est retiré du four et ouvert, et une quantité 3 kilogrammes de polymère moussant (polyéthylène de grade M 532 de la société MATRIX POLYMERS) est introduite en poudre dans le moule, qui est ensuite refermé, remis en rotation et replacé dans le four 10, dont la température est alors fixée à 240°C. Lorsque la température de la matière atteint 150°C, le moule 1 est retiré du four 10. Le moule 1 est toutefois laissé en rotation hors du four jusqu'à ce que la température dépasse la température de moussage (ici de 170°C) par inertie thermique. Le moussage est laissé à se poursuivre pendant une durée jugée suffisante et peut éventuellement être interrompu par les dispositifs de refroidissement. Lorsque la température de la matière descend au-dessous de la température de moussage, la rotation du moule 1 est arrêtée puis le moule est ouvert et une quantité de 2 kilogrammes de polymère (polyéthylène métallocène de grade commercial RM 8343 de la société BOREALIS) est introduite en poudre dans le moule 1. Le moule est refermé, remis en rotation et réintroduit dans le four dont la température est fixée à 240°C. Lorsque la température de la matière atteint 120°C, le moule 1 est retiré du four 10, et laissé en rotation sous refroidissement naturel jusqu'à ce que la matière ait une température qui dépasse suffisamment par inertie thermique sa température de fusion pour que le dernier polymère soit convenablement moulé. Lorsque cette température de moulage est atteinte, on refroidit le moule jusqu'à ce que la pièce soit solidifiée. Le moule peut alors être arrêté et ouvert pour démouler la pièce 4. Les couches 13, 14 et 15 ont ici des épaisseurs de 5, 8 et 2 millimètres.

Les températures de fusion de ces trois polymères étaient respectivement 132°C, 130°C et 129°C. Les échauffements étaient évidements suffisants pour que les températures de fusion aient toutes été atteintes, et que les couches se soient ainsi formées. La couche moussante 14 était de bonne qualité, régulière et adhérant bien aux autres.

## Revendications

1. Procédé de rotomoulage d'une pièce comprenant au moins une première couche (13), en polymère compact, et une deuxième couche (14), en polymère en mousse et entouré sur une face par la première couche (13), comprenant des étapes de placement d'une première quantité de matière devant composer la première couche dans un moule (1), de rotation du moule pour dessiner la première couche et de chauffage de la première quantité de matière pour la fondre, puis de placement d'une deuxième quantité de matière devant composer la deuxième couche dans le moule, et de remise en rotation du moule, la rotation du moule étant maintenue jusqu'à ce que la deuxième quantité de matière atteigne la température de moussage et tant qu'elle reste à la température de moussage ou au-dessus de cette température, formant ainsi la deuxième couche, **caractérisé en ce que** le chauffage est interrompu avant que la deuxième quantité de matière n'atteigne sa température de moussage.

2. Procédé de rotomoulage selon la revendication 1, **caractérisé en ce que** le chauffage est interrompu dès que le moule atteint une température déterminée comprise entre une température de fusion et la température de moussage de la deuxième quantité de matière.

3. Procédé de rotomoulage d'une pièce selon l'une quelconque des revendications 1 ou 2, **caractérisé en ce qu'**il comprend encore des étapes de placement d'une troisième quantité de matière, devant composer une troisième couche (15), en polymère compact, quand la deuxième couche a été formée, puis de remise en rotation du moule et de chauffage du moule.

4. Procédé de rotomoulage selon la revendication 3, **caractérisé en ce que** le chauffage du moule postérieur au placement de la troisième quantité de matière est interrompu avant que celle-ci n'atteigne sa température de fusion.

5. Procédé de rotomoulage selon l'une quelconque des revendications 1 à 4, et appliqué à une pièce comprenant une concavité, **caractérisé en ce que** le moule (1) est dépourvu de contour de moulage de la concavité.

6. Procédé de rotomoulage selon l'une quelconque des revendications 1 à 5 et appliqué à une pièce dont l'épaisseur ou la nature chimique des couches entourant la couche de mousse est différente.

## Patentansprüche

1. Verfahren zum Rotationsformen eines Werkstücks mit wenigstens einer ersten Schicht (13) aus kompaktem Polymer und einer zweiten Schicht (14) aus Polymerschaum, auf einer Seite umgeben von der ersten Schicht (13), mit Schritten der Platzierung einer ersten Materialmenge zur Bildung der ersten Schicht in einer Form (1), der Rotation der Form zur Ausbildung der ersten Schicht und der Erwärmung der ersten Materialmenge, um sie zu schmelzen, sodann der Platzierung einer zweiten Materialmenge zur Bildung der zweiten Schicht in der Form und der erneuten Rotation der Form, wobei die Rotation der Form aufrechterhalten wird, bis die zweite Materialmenge die Schäumungstemperatur erreicht hat und solange sie auf dieser Temperatur oder über dieser Temperatur bleibt, und sich dabei die zweite Schicht ausbildet,
**dadurch gekennzeichnet, dass** die Erwärmung unterbrochen wird, bevor die zweite Materialmenge ihre Schäumungstemperatur erreicht.

2. Verfahren zum Rotationsformen nach Anspruch 1, **dadurch gekennzeichnet, dass** die Erwärmung unterbrochen wird, sobald die Form eine bestimmte Temperatur erreicht hat, enthalten zwischen einer Schmelztemperatur und der Schäumungstemperatur der zweiten Materialmenge.

3. Verfahren zum Rotationsformen eines Werkstücks nach einem der Ansprüche 1 oder 2, **dadurch gekennzeichnet, dass** es auch noch Schritte zur Platzierung einer dritten Materialmenge zur Bildung einer dritten Schicht (15) aus kompaktem Polymer, nachdem die zweite Schicht ausgebildet worden ist, sodann der erneuten Rotation der Form und der Erwärmung der Form umfasst.

4. Verfahren zum Rotationsformen nach Anspruch 3, **dadurch gekennzeichnet, dass** die Erwärmung der Form nach der Platzierung der dritten Materialmenge unterbrochen wird, bevor diese ihre Schmelztemperatur erreicht.

5. Verfahren zum Rotationsformen nach einem der Ansprüche 1 bis 4 und angewandt bei einem einen Hohlraum umfassenden Werkstück, **dadurch gekennzeichnet, dass** die Form (1) keine Formungskontur des Hohlraums aufweist.

6. Verfahren nach einem der Ansprüche 1 bis 5 und angewandt bei einem Werkstück, bei dem die Dicke oder die chemische Natur der die Schaumschicht umgebenden Schichten unterschiedlich ist.

## Claims

1. Process for rotomoulding a part comprising at least one first layer (13), made of a compact polymer, and a second layer (14) made of a foam polymer and surrounded on one face by the first layer (13), including steps for placement of a first quantity of material to make up the first layer in a mould (1), rotation of the mould to form the first layer and heating of the first quantity of material to melt it, and then placement of a second quantity of material to make up the second layer in the mould and restarting rotation of the mould, the rotation of the mould being maintained until the second quantity of material reaches the foaming temperature and while it is at or above said foaming temperature, thus forming the second layer, **characterized in that** heating is interrupted before the second quantity of material reaches its foaming temperature.

2. Rotomoulding process according to claim 1, **characterized in that** heating is interrupted as soon as the mould reaches a determined temperature between a melting temperature and the foaming temperature of the second quantity of material.

3. Process for rotomoulding a part according to either claim 1 or 2, **characterized in that** it includes steps for placement of a third quantity of material, to make up a third layer (150, made of a compact polymer, when the second layer has been formed, then the mould is rotated again and heated.

4. Rotomoulding process according to claim 3, **characterized in that** heating of the mould before placement of the third quantity of material is interrupted before the third quantity of material reaches its melting temperature.

5. Rotomoulding process according to any one of claims 1 to 4, and applied to a part comprising a concavity, **characterized in that** the mould (1) is not provided with a concavity moulding contour.

6. Rotomoulding process according to any one of claims 1 to 5, applied to a part for which the thickness or chemical nature of the layers surrounding the foam layer is different.
